Europäisches Patentamt

European Patent Office

Office européen des brevets

(11) Numéro de publication: **0 496 458 A1**

## DEMANDE DE BREVET EUROPEEN

(21) Numéro de dépôt: **92200117.7**

(51) Int. Cl.5: **H02B 1/40**

(22) Date de dépôt: **16.01.92**

(30) Priorité: **23.01.91 BE 9100053**

(43) Date de publication de la demande:
**29.07.92 Bulletin 92/31**

(84) Etats contractants désignés:
**DE ES FR IT NL PT**

(71) Demandeur: **VYNCKIER Naamloze Vennootschap**
**Nieuwe Vaart 51**
**B-9000 Gent(BE)**

(72) Inventeur: **Van Lancker, Christian T.M.**
**Bosstraat 170**
**BE-9810 Nazareth(BE)**

(74) Mandataire: **Debrabandere, René**
**Bureau De Rycker nv Arenbergstraat 13**
**B-2000 Antwerpen(BE)**

(54) **Construction d'armoire pour la fixation et la protection d'appareillage, ainsi que des constituants d'armoire et des éléments de support utilisés à cet effet.**

(57) Construction d'armoire pour la fixation et la protection d'appareillage, en particulier d'appareillage électrique, ladite construction comprenant une série de constituants d'armoire (1, 2, 3) parmi lesquels au moins un fond (1) et au moins un cadre (2) constitué par des parois (13) dirigées transversalement par rapport au fond (1), ainsi que des éléments de support (4, 5) destinés à l'appareillage (6), qui sont montés sur au moins un des constituants d'armoire (1, 2 ou 3) parallèlement au fond (1), caractérisée en ce que le cadre (2) est muni, du côté interne d'au moins une de ses parois (13), de guidages (28) dirigés transversalement par rapport au fond (1), destinés à une extrémité des éléments de support (4 et 5), tandis que les éléments de support (4 et 5) sont munis, à cette extrémité, de moyens (30) destinés à bloquer cette extrémité sur au moins un de ces guidages (28).

Fig.13

L'invention concerne une construction d'armoire pour la fixation et la protection d'appareillage, en particulier d'appareillage électrique, ladite construction comprenant une série de constituants d'armoire parmi lesquels au moins un fond et au moins un cadre constitué par des parois dirigées transversalement par rapport au fond, ainsi que des éléments de support destinés à l'appareillage, qui sont montés sur au moins un des constituants d'armoire parallèlement au fond.

Des constructions d'armoires de ce type concernent ce qu'il est convenu d'appeler des armoires pour compteurs, dans lesquelles sont montés un watt mètre, un interrupteur de raccordement et éventuellement d'autres appareillages électriques. Bien que l'on puisse fixer l'appareil directement sur l'armoire, on le monte pratiquement toujours sur des éléments de support. La plupart du temps, ces éléments de support concernent ce qu'il est convenu d'appeler des rails DIN sur lesquels on peut fixer les appareils électriques de manière à pouvoir les enlever très rapidement. Dans ces constructions d'armoires connues, les rails sont, soit fixés directement au fond, soit montés sur un châssis qui est fixé à son tour au fond.

De même, les appareils électriques ne doivent pas toujours être montés à la même profondeur dans l'armoire. Par exemple, on doit disposer le watt mètre aussi près que possible du fond à cause de son encombrement important, mais, de préférence, on place un disjoncteur aussi près que possible du côté avant, étant donné qu'on doit pouvoir le manipuler facilement. Dans les constructions d'armoires connues, on rend possible cette différence quant à la disposition par rapport au fond, en utilisant des éléments d'écartement. De ce fait, le nombre de pièces détachées qui font partie d'une construction d'armoire destinée à du matériel électrique est relativement grand, tandis que le montage est rendu moins facile du fait de ces éléments d'écartement.

L'invention a pour objet d'éliminer cet inconvénient et de procurer une construction d'armoire pour la fixation et la protection d'appareillage, en particulier d'appareillage électrique, par laquelle on peut régler de manière simple la distance existant entre le fond et les éléments de support sans devoir utiliser des éléments d'écartement.

A cet effet, le cadre est équipé de guidages qui sont disposés du côté interne d'au moins une de ses parois, qui sont dirigés transversalement par rapport au fond et qui sont destinés à une extrémité des éléments de support, tandis que les éléments de support sont munis à cette extrémité de moyens destinés à bloquer cette extrémité sur au moins un de ces guidages.

Les éléments de support et partant, également l'appareillage ne sont plus fixés au fond mais bien au cadre. Grâce aux moyens, on peut bloquer les éléments de support à n'importe quel endroit sur les guidages.

Dans une forme de réalisation particulière de l'invention, le cadre et le fond concernent des constituants d'armoire séparés qui sont fixés l'un à l'autre par des moyens.

Dans cette forme de réalisation, on peut monter les éléments de support sur le cadre à l'atelier avant de fixer le cadre sur le fond. Même les appareils peuvent être montés au préalable sur les éléments de support. Ce montage est très facile non seulement, parce qu'il peut avoir lieu à l'atelier, mais encore parce que le cadre est ouvert aussi bien du côté avant que du côté arrière, le côté arrière des éléments de support et des appareils étant ainsi aisément accessibles.

De préférence, on fixe le cadre au fond de manière amovible.

Lorsqu'on doit remplacer, retirer ou ajouter un appareil, il suffit de retirer le cadre munis des appareils existants et de monter à sa place un nouveau cadre sur lequel sont montés les appareils désirés, si bien qu'on restreint au minimum le travail là où l'on procède à la construction de l'armoire.

Dans une forme de réalisation remarquable de l'invention, la construction d'armoire comprend au moins un couvercle qui est monté sur le cadre du côté opposé au fond.

De manière avantageuse, ce couvercle s'ajuste sur le fond dans la forme de réalisation dans laquelle le cadre est fixé de manière amovible.

Dans cette forme de réalisation, avant de placer l'appareillage électrique, on peut installer le fond sur place et fixer le couvercle sur ce dernier, le câble d'alimentation en courant pouvant alors déjà être amené jusqu'à l'armoire ainsi formée. Plus tard, par exemple lorsqu'on a terminé le bâtiment dans lequel on a installé la construction d'armoire, on peut installer le cadre équipé entre autres du watt mètre, et on n'a plus qu'à raccorder le câble d'alimentation en courant.

Dans une forme de réalisation avantageuse de l'invention, le cadre est équipé de guidages qui sont disposés sur au moins deux parois opposées et qui sont dirigés transversalement par rapport au fond.

Le cadre peut même être équipé de guidages qui sont disposés sur la face interne de chaque paroi et qui sont dirigés transversalement par rapport au fond.

Dans les deux dernières formes de réalisation, au moins un certain nombre des éléments de support peuvent être montés, avec leurs deux extrémités, par-dessus au moins un guidage de, respectivement, deux parois du cadre se faisant mutuellement face.

En l'occurrence, les éléments de support constituent des raccordements pour ces parois et contribuent à la rigidité et à la stabilité dimensionnelle du cadre. Cette caractéristique est surtout avantageuse lorsque l'appareillage est monté au préalable sur le cadre et que le cadre doit être transporté conjointement avec l'appareillage. Au cours de ce transport, l'appareillage est protégé par le cadre, si bien que l'on n'a pas besoin d'un emballage spécifique.

Dans une forme de réalisation avantageuse de l'invention, les guidages constituent des nervures qui possèdent un élargissement à leur bord libre, tandis que les éléments de support possèdent, à au moins une extrémité, une partie qui vient s'accrocher derrière l'élargissement.

De préférence, les nervures ont une section transversale en forme de T.

L'invention concerne également des constituants d'armoire et, plus précisément, le cadre et les éléments de support, destinés de manière connue à être utilisés dans la construction d'armoire conformément à une des formes de réalisation précédentes. Ces constituants d'armoire et ces éléments de support peuvent être mis séparément sur le marché.

D'autres particularités et avantages de l'invention se dégageront de la description ci-après d'une construction d'armoire pour la fixation et la protection d'appareillages selon l'invention. Cette description est uniquement donnée à titre d'exemple et elle ne limite pas l'invention. Les chiffres de référence concernent les dessins annexés, dans lesquels:

la figure 1 est une vue latérale qui représente une construction d'armoire selon l'invention;

la figure 2 représente une vue en coupe transversale prise selon la ligne II-II de la figure 1;

la figure 3 représente une vue en coupe transversale prise selon la ligne III-III de la figure 2;

la figure 4 représente une vue en coupe transversale analogue à celle de la figure 2, mais dans laquelle on a omis le cadre;

la figure 5 représente une vue en coupe transversale prise selon la ligne V-V de la figure 2, dessinée à plus grande échelle;

la figure 6 représente une vue en coupe transversale analogue à celle de la figure 5, mais avant le serrage de la vis;

la figure 7 représente une vue en coupe transversale prise selon la ligne VII-VII de la figure 2, à la même échelle que celle de la figure 5;

la figure 8 représente une vue en coupe transversale prise à l'endroit de la ligne VIII-VIII de la figure 5;

la figure 9 représente une vue en coupe transversale prise à l'endroit de la ligne IX-IX de la figure 5;

la figure 10 représente une vue en perspective d'un élément de support muni de ses moyens de blocage, faisant partie de la construction d'armoire selon les figures 1 à 3, les constituants ayant été dessinés séparément;

la figure 11 représente une vue en perspective d'une paroi latérale du cadre muni d'un élément de support et d'un appareil électrique, tous les composants ayant été dessinés séparément;

la figure 12 représente une vue en perspective prise depuis le côté avant de la partie du cadre provenant de la construction d'armoire selon les figures 1 à 3, muni d'éléments de support et d'un appareil;

la figure 13 représente une vue en perspective analogue à celle de la figure 2, mais prise depuis le côté arrière;

la figure 14 représente une vue prise en coupe transversale analogue à celle de la figure 8 d'une partie de la construction d'armoire, selon une autre forme encore de réalisation;

la figure 15 représente la vue en coupe transversale de la figure 14, les moyens destinés à bloquer l'élément de support étant positionnés autrement;

la figure 16 représente une vue en coupe transversale prise selon la ligne XVI-XVI de la figure 15.

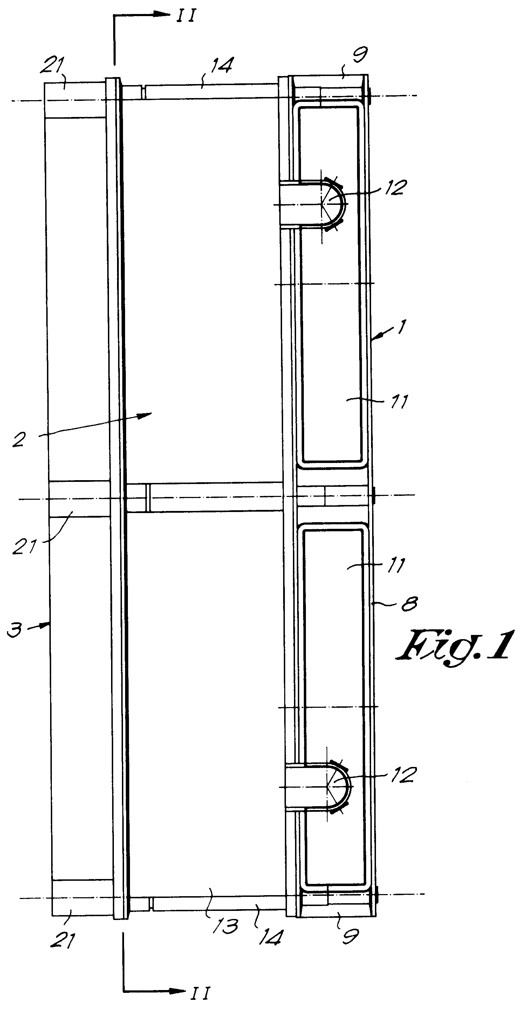

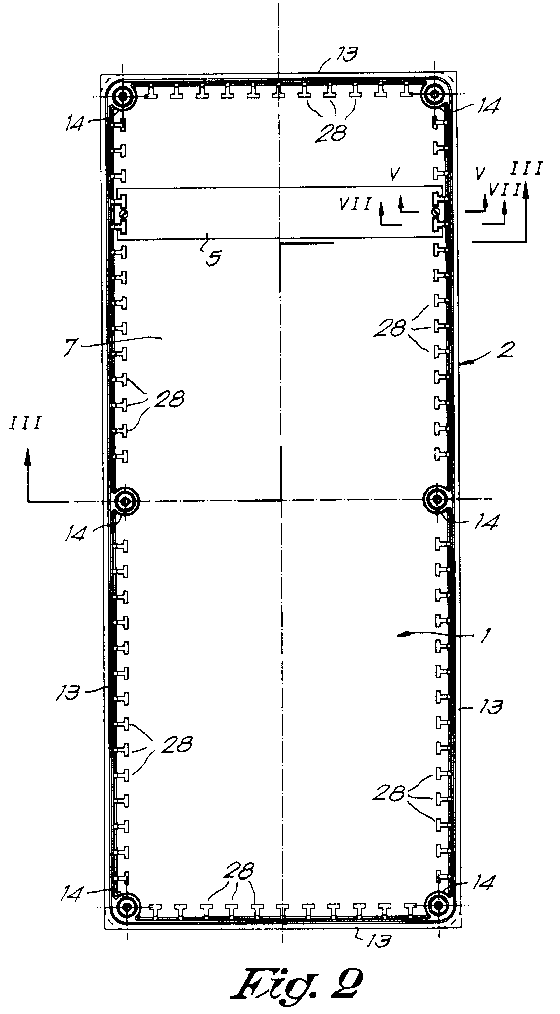

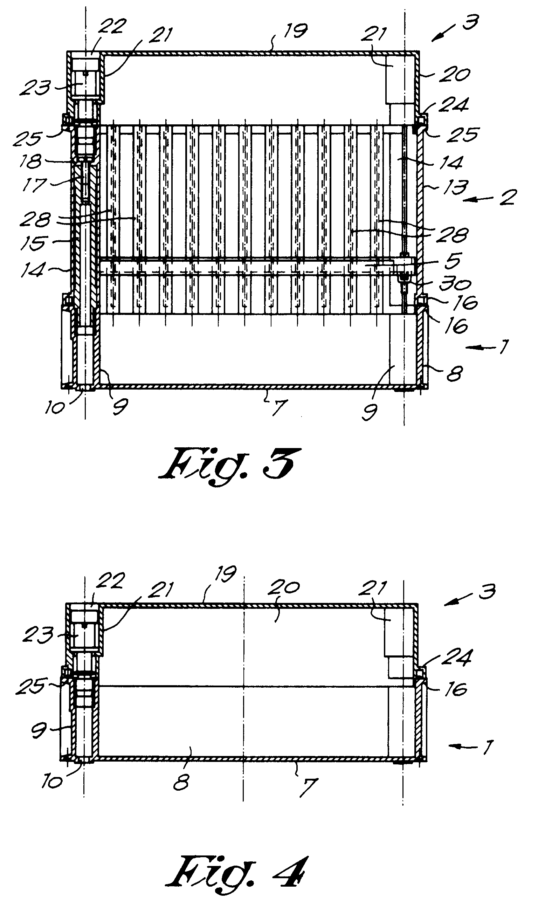

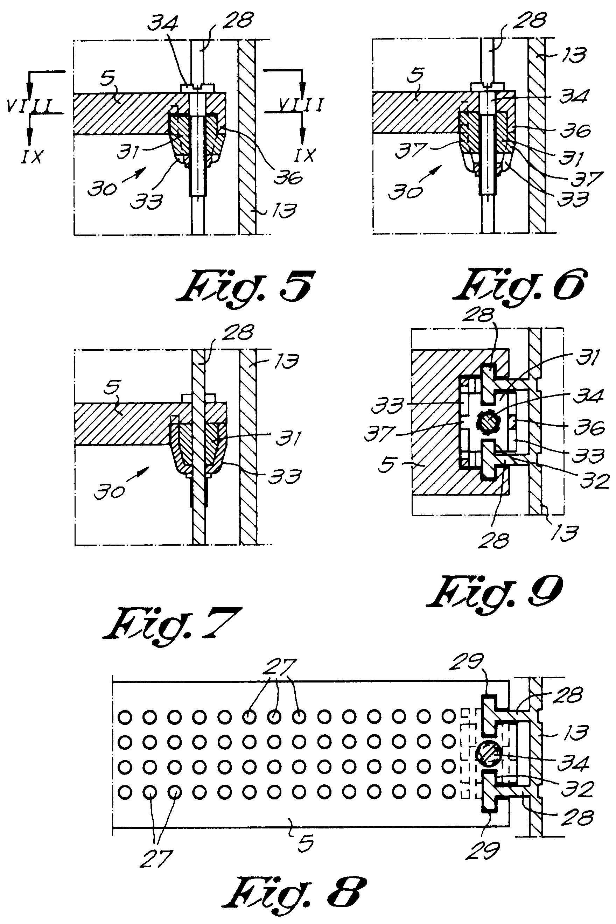

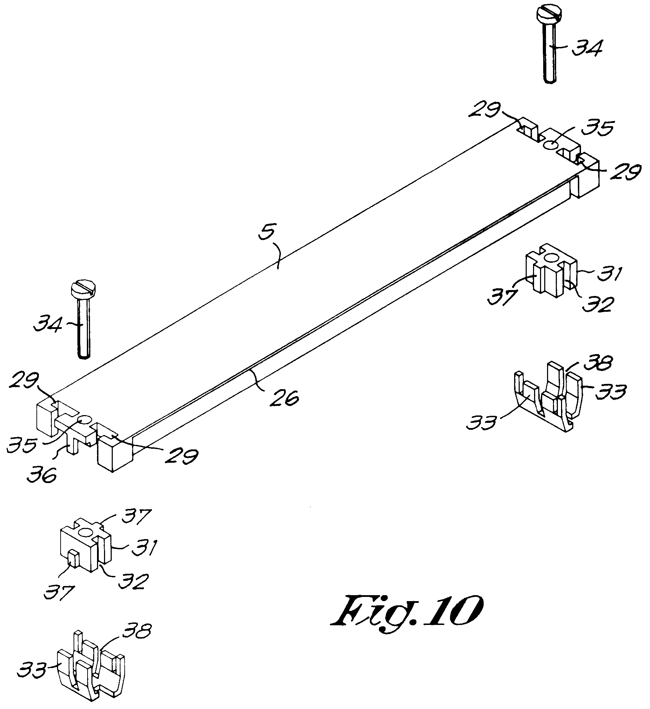

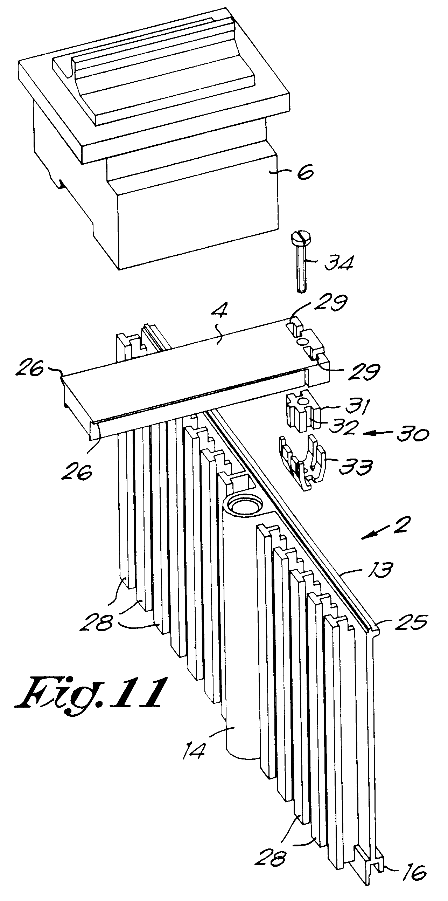

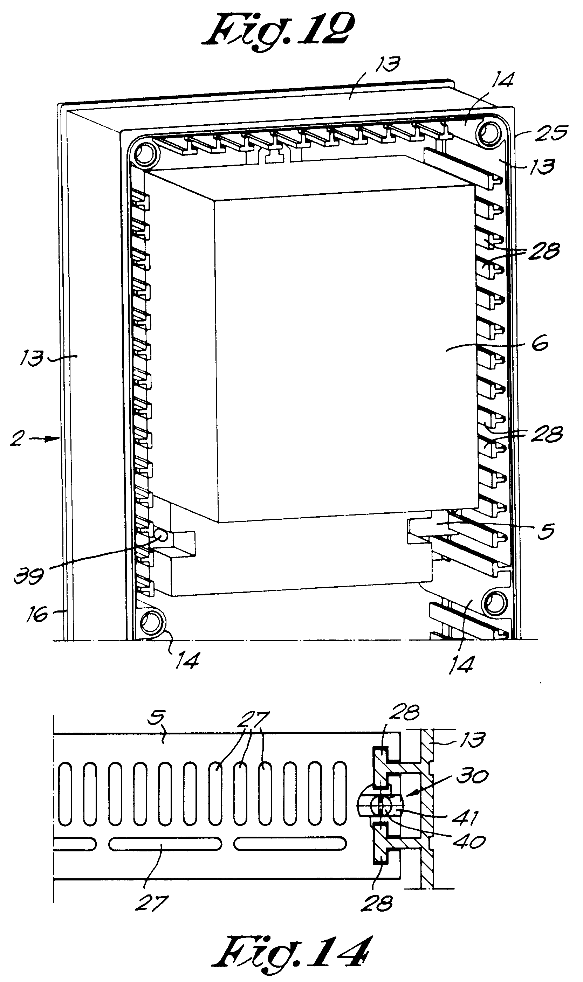

La construction d'armoire selon les figures 1 à 13 comprend trois constituants d'armoire indépendants en matière synthétique, notamment un fond 1, un cadre 2 et un couvercle 3, ainsi que des éléments 4 et 5 montés sur le cadre 2, sur lesquels sont fixés des appareils électriques 6.

Le fond 1 est constitué d'une plaque de fond rectangulaire 7 et de quatre parois 8 disposées verticalement sur cette dernière. Aux quatre coins et à mi-distance des parois longitudinales, on a pratiqué des douilles verticales 9 qui, avec leurs extrémités les plus inférieures, donnent sur une ouverture 10 pratiquée dans la plaque de fond 7 et qui, en outre, sont munies d'un filet de vis interne. Au moyen de vis non représentées que l'on visse à travers les ouvertures 10, on peut fixer le fond 1 contre un mur vertical.

Dans les parois verticales 8, on a encastré des éléments d'entrée 11 qui sont munis d'une ou de plusieurs entrées obturées ou obturables 12, destinées à un câble d'amenée de courant. Ces entrées 12 donnent sur le bord libre le plus externe de la paroi correspondante 8 de telle sorte que, avant de placer un autre élément d'armoire sur le fond monté 1, on puisse disposer latéralement un câble d'amenée de courant dans une entrée libérée 12.

Le cadre 2 est constitué de quatre parois 13 qui décrivent le même périmètre que les parois verticales 8 du fond 1. Dans les quatre coins et à mi-distance des parois verticales 13, on a également façonné des douilles 14 pour fixer le cadre au fond 1.

Pour fixer le cadre 2 au fond 1, on visse, dans les douilles 9 de ce fond 1, des broches creuses 15, pardessus lesquelles viennent s'ajuster les douilles 14 du cadre 2. On place le cadre 2 avec les douilles 14 par-dessus les broches 15. Le cadre 2 vient, avec un bord 16 faisant saillie, se mettre contre un bord 16 faisant saillie des parois verticales 8. L'extrémité des broches 15 éloignée du fond 1 est munie d'un filet de vis interne et, à l'aide de vis 17 que l'on visse dans les broches creuses 15 en passant à travers un rétrécissement 18 prévu dans les douilles 14, on fixe le cadre 2 aux broches 15 et ainsi, au fond 1.

Les extrémités des douilles 14 du cadre 2 éloignées du fond 1 possèdent la même forme que celles des extrémités des douilles 9 du fond 1 munies d'un filet de vis et elles sont, par conséquent, également munies d'un filet de vis interne.

Le couvercle 3 est constitué, de la même manière que le fond 1, d'une plaque rectangulaire 19 et de parois latérales 20 disposées verticalement sur cette dernière. Dans les coins et à mi-chemin des parois latérales 20 les plus longues, on a façonné des douilles 21 dirigées perpendiculairement à la plaque 19. A l'endroit de ces douilles 21, on pratique une ouverture 22 dans la plaque 19 dans laquelle peut venir se loger une vis 23. L'extrémité des douilles 21 adjacentes à la plaque 19 est plus large que l'autre extrémité de telle sorte que, dans les douilles 21, il se forme une butée destinée à une vis 23. Le couvercle 3 vient s'ajuster, avec un bord 24 faisant saillie, contre un bord 25 faisant saillie du cadre 2 et est fixé au cadre 2 à l'intervention de vis 23 que l'on visse dans les douilles 14 du cadre 2 en passant par les douilles 21, comme représenté en figure 3. De ce qui précède, il apparaît nettement que l'on peut fixer le couvercle 3 de manière analogue et avec les mêmes vis 23 également directement sur le fond 1, comme représenté en figure 4.

On peut fixer le couvercle 3 sur ce fond 1 immédiatement après l'insertion d'un câble de courant dans le fond 1. On isole les conducteurs du câble de courant ou on les fixe à un interrupteur, après quoi, on peut mettre ces conducteurs sous tension. Par après, on peut monter le cadre 2 avec les appareils 6 entre le fond 1 et le couvercle 3.

Les éléments de support 4 et 5 constituent des lattes en matière synthétique qui, à l'exception d'une extrémité ou des deux, sont munies d'un bord 26 faisant saillie, de part et d'autre et dans le prolongement d'un côté plat que l'on appelle le côté avant. Les dimensions de ces éléments de support, en particulier la disposition et la grandeur des bords 26, sont telles que ces bords 26 correspondent aux bords d'un rail DIN de telle sorte que des appareils que l'on peut fixer sur un rail DIN, par exemple que l'on peut fixer par déclic, peuvent être fixés sans plus, sur un élément de support 4 ou 5.

Les appareils 6 peuvent également être fixés au moyen de vis à un ou plusieurs éléments de support 4 ou 5. A cet effet, on peut forer dans ces éléments de support 4 ou 5, à l'exception des extrémités précitées, une série d'ouvertures 27 destinées à ces vis, comme représenté en figure 8.

Il est important de fixer les éléments de support 4 et 5 non pas sur le fond 1, mais bien sur le cadre 2 et, en fait, à une certaine distance du fond 1 que l'on peut choisir librement. A cet effet, le cadre 2 est muni, du côté interne de ses quatre parois 13, de nervures 28 à section transversale en T. Ces nervures s'étendent en profondeur, c'est-à-dire depuis le côté avant ouvert jusqu'au côté arrière ouvert du cadre 2 et ainsi, transversalement aux parois latérales 13 et transversalement à la plaque de fond 7. L'écart entre deux têtes adjacentes de nervures 28 en forme de T est plus ou moins égal à la largeur d'une tête de ce type.

Les éléments de support 4 possèdent une section terminale et les éléments de support 5 possèdent deux sections terminales qui viennent s'ajuster par coulissement par-dessus deux nervures adjacentes 28 en forme de T. A cet effet, ces sections terminales sont munies de deux évidements correspondants 29 en forme de T.

Chacun des éléments 4 et 5, avec sa section terminale que l'on a fait glisser par-dessus deux nervures 28, peuvent être bloqués sur ces nervures à l'aide de moyens de blocage 30. Comme on peut le voir surtout dans les figures 5 à 10, ces moyens de blocage sont réalisés à l'aide d'un organe de serrage en caoutchouc 31 qui est muni, de part et d'autre, d'une rainure 32 et d'un moyen de tension réalisé à l'aide d'un étrier 33 et d'une cheville 34 qui y est vissée, afin de fermer par poussée les rainures précitées 32. La cheville 34 vient s'insérer en passant à travers une ouverture 35 qui est située juste entre les deux évidements 29 pratiqués dans une section terminale d'un élément de support 4 ou 5 et elle est vissée dans le fond de l'étrier 33 dont les deux branches s'écartent l'une de l'autre à partir de ce fond. La première branche possède une section médiane qui vient s'ajuster dans un évidement pratiqué dans le côté arrière d'un élément de support 4 ou 5, ainsi que deux extrémités qui font saillie au-delà de la section médiane et qui viennent s'ajuster dans deux des côtés arrière susmentionnés. L'autre branche enserre un doigt 36 qui est disposé sur une extrémité d'une section terminale en étant dirigé vers l'arrière. L'organe de serrage en caoutchouc 31 est disposé entre les deux branches de l'étrier 33, des saillies 37 venant se loger dans des encoches 38 pratiquées dans ces branches. Les rainures 32 sont situées à mi-chemin entre les branches susmentionnées, par-dessus des sections des têtes de deux rainures adjacentes 28. Lorsqu'on visse la cheville 34 dans l'étrier 33, cet étrier est tiré vers l'avant et l'organe de serrage 31 est pressé par les branches de cet étrier, qui se dirigent l'une vers l'autre. Ainsi, on comprime les rainures 32 et, par conséquent, cet organe de serrage 31 est serré contre les têtes susmentionnées des nervures 28, comme représenté dans les figures 5 et 7. En figure 6, on représente les moyens de blocage 30 avant que l'étrier 33 ne comprime l'organe de serrage en caoutchouc 31.

Les éléments de support 4 et 5 diffèrent principalement l'un de l'autre quant à leur longueur. La longueur des éléments de support 4 ne représente que la moitié de celle des éléments de support 5 et les éléments de support 4 ne possèdent qu'une section terminale qui vient s'ajuster par-dessus deux nervures 28. La longueur des éléments de support 5 est telle que leurs sections terminales viennent s'ajuster par-dessus des nervures 28 disposées sur deux parois longitudinales 13 du cadre 2, se faisant mutuellement face. Lorsque ces éléments de support sont serrés sur ces nervures 28, ils apportent leur collaboration quant à la recherche de rigidité pour le cadre 2, ce qui est surtout important dans le cas où ce cadre 2 n'est pas encore monté sur un fond 1.

Un appareil électrique peut être fixé sur un seul élément de support ou bien sur plusieurs éléments de support. Dans les figures 12 et 13, on a fixé au moyen de vis 39, un watt mètre 6 sur un seul élément de support 5 qui s'étend en direction transversale par rapport à la construction d'armoire et parallèlement au fond 1, ainsi que sur un seul élément de support 4 qui est fixé à une petite paroi 13 du cadre 2 et qui s'étend ainsi sur une petite distance en direction longitudinale de la construction d'armoire.

La forme de réalisation de la construction d'armoire selon les figures 14 à 16, diffère de la forme de réalisation décrite ci-avant par une autre construction des moyens de blocage 30 et par une autre forme des ouvertures 27 destinées aux vis ou aux chevilles de fixation.

Ces moyens de blocage 30 sont réalisés par un élément qui est monté en rotation à une extrémité d'un élément de support 4 ou 5, qui est constitué d'un corps cylindrique 40 et, à ses deux extrémités, d'une tête plate oblongue 41 à arêtes vives. Le corps 40 est logé dans une ouverture 42 qui s'étend juste entre deux évidements adjacents 29 en T, transversalement à travers l'élément de support 4 ou 5.

Une ouverture 43 qui débouche sur le bout, donne, via une embouchure qui est un peu plus étroite que le diamètre de l'ouverture 42, sur cette dernière, si bien que le corps 40 peut être fixé par déclic depuis l'extérieur dans l'ouverture 42. La largeur des têtes 41 est inférieure à la distance s'étendant entre les têtes de deux nervures adjacentes 28 en T, mais la longueur des têtes 41 est légèrement supérieure à cette distance.

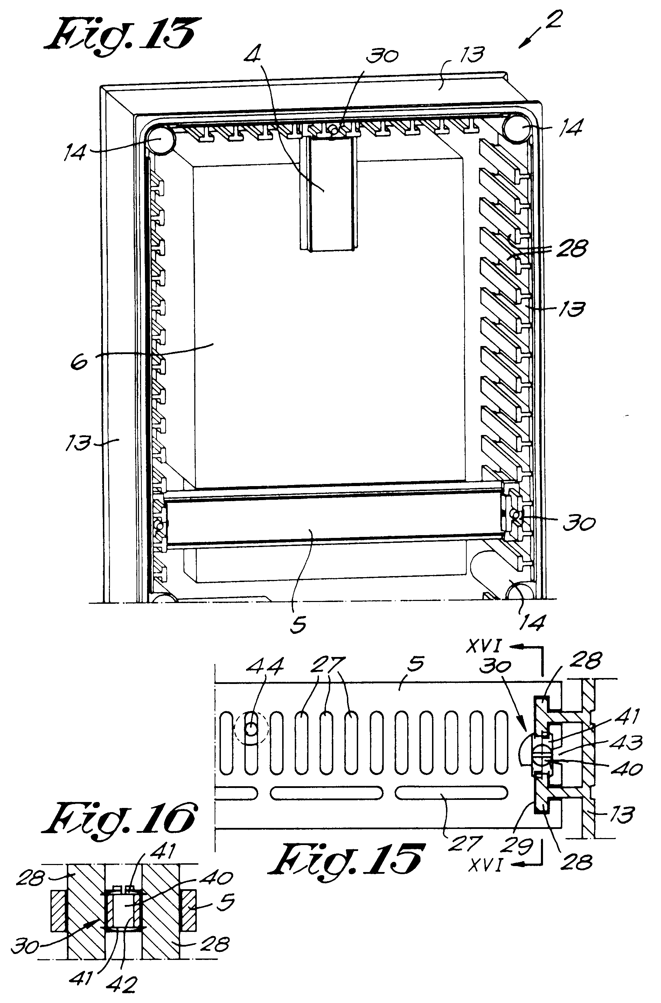

Lorsque l'élément de blocage 30 est dirigé avec les têtes 41 en direction longitudinale de l'élément de support 4 ou 5, comme représenté en figure 14, cet élément de blocage 30 est dégagé des nervures 28 et l'élément de support peut coulisser. En effectuant une rotation de 90° à partir de cet état, les extrémités des têtes 41 viennent mordre dans les nervures 28, comme représenté en figure 15.

On ne peut alors plus faire coulisser l'élément de blocage 30 et partant, l'élément de support 4 ou 5 par-dessus les nervures 28.

Pour permettre de faire tourner l'élément de blocage 30, la tête 41 située à l'avant est équipée d'une encoche destinée à un tourne-vis.

Les ouvertures 27 ne sont pas rondes, mais oblongues, une série d'ouvertures étant orientées en direction longitudinale et une série d'ouvertures étant orientées en direction transversale de l'élément de support 4 ou 5. Dans une ou plusieurs de ces ouvertures oblongues 27, on peut installer des éléments d'écrous 44, dans lesquels on peut visser des chevilles de fixation.

Etant donné que les appareils 6 sont fixés au cadre 2 et que ce cadre 2 concerne un constituant d'armoire séparé, on peut monter les appareils 6 sur ce cadre 2 à l'atelier et les monter ultérieurement avec le cadre 2 sur le fond 1. Ceci permet un montage facile des appareils 6. Au cas où l'on doit retirer, ajouter ou remplacer des appareils 6, on peut le faire éventuellement en retirant de la construction d'armoire, le cadre 2 avec les appareils existants et en le remplaçant par un nouveau cadre 2 muni des appareils désirés 6.

On peut placer les appareils 6 sans utiliser des écarteurs, simplement en faisant coulisser les éléments de support 4 ou 5 temporairement desserrés, par-dessus les nervures 28 à la distance désirée par rapport au fond 1.

La construction d'armoire offre d'énormes possibilités d'utilisation. Il est même possible de monter deux cadres 2 l'un sur l'autre s'il y a lieu de monter des appareils très volumineux. Le nombre des différentes pièces détachées de la construction d'armoire est limité, ce qui rend la construction d'armoire relativement bon marché.

L'invention n'est en aucune façon limitée aux formes de réalisation décrites précédemment et, dans le cadre des revendications, on peut apporter bon nombre de modifications aux formes de réalisation décrites, entre autres en ce qui concerne la forme, la composition, la destination, le matériel et le nombre de pièces détachées que l'on utilise dans la mise en oeuvre de la présente invention.

En particulier, les nervures ne doivent pas nécessairement posséder une section transversale en T. De même, il n'est pas nécessaire que les extrémités des éléments de support qui sont fixés au cadre viennent s'ajuster par-dessus deux nervures. Ces extrémités peuvent éventuellement venir se disposer également par-dessus une seule nervure ou par-dessus plus de deux nervures.

La construction d'armoire n'est pas nécessairement limitée à un seul fond, à un seul cadre et à un seul couvercle. Sur un seul et même fond, on peut, par exemple, monter deux ou plusieurs cadres ou on peut monter un seul et même cadre sur un ou plusieurs fonds. La construction peut également faire partie d'une série par laquelle on place une série de fonds l'un à côté de l'autre et on les fixe, de préférence, l'un à l'autre. Sur ces fonds, on peut alors fixer un ou plusieurs cadres et sur les cadres, un ou plusieurs couvercles.

Pour autant que la construction d'armoire est destinée à du matériel électrique, l'amenée de courant ne doit pas nécessairement avoir lieu au moyen de câbles. L'amenée de courant peut également avoir lieu au moyen de rails. Du fait que l'appareil n'est pas fixé sur le fond, mais bien sur le cadre, on peut guider ces rails sans problème par-dessus le fond à travers la construction d'armoire.

**Revendications**

1. Construction d'armoire pour la fixation et la protection d'appareillage, en particulier d'appareillage électrique, ladite construction comprenant une série de constituants d'armoire (1, 2, 3) parmi lesquels au moins un fond (1) et au moins un cadre (2) constitué par des parois (13) dirigées transversalement par rapport au fond (1), ainsi que des éléments de support (4, 5) destinés à l'appareillage (6), qui sont montés parallèlement au fond (1) sur au moins un des constituants d'armoire (1, 2 ou 3), **caractérisée en ce que** le cadre (2) est muni, sur le côté interne d'au moins une de ses parois (13), de guidages (28) dirigés transversalement par rapport au fond (1) et qui sont destinés à une extrémité des éléments de support (4 et 5), tandis que les éléments de support (4 et 5) sont munis, à cette extrémité, de moyens (30) destinés à bloquer cette extrémité sur au moins un de ces guidages (28).

2. Construction d'armoire selon la revendication précédente, **caractérisée en ce que** le cadre (2) et le fond (1) concernent des constituants d'armoire séparés qui sont fixés l'un à l'autre par des moyens (15, 17).

3. Construction d'armoire selon la revendication précédente, **caractérisée en ce que** le cadre (2) et le fond (1) sont fixés l'un à l'autre de manière amovible.

4. Construction d'armoire selon l'une quelconque des revendications précédentes, **caractérisée en ce qu'**elle comprend au moins un couvercle (3) qui est monté du côté du cadre (2) qui se détourne du fond (1).

5. Construction d'armoire selon les revendications 3 et 4, **caractérisée en ce que** le couvercle (3) s'ajuste sur le fond (1).

6. Construction d'armoire selon l'une quelconque des revendications précédentes, **caractérisée en ce qu'**au moins un élément de support (4) ou (5) est apte à coulisser avec au moins une extrémité par-dessus au moins deux guidages adjacents (28).

7. Construction d'armoire selon l'une quelconque des revendications précédentes, **caractérisée en ce que** le cadre (2) est muni, sur au moins deux parois (13) se faisant mutuellement face, de guidages (28) dirigés transversalement par rapport au fond (1).

8. Construction d'armoire selon la revendication précédente, **caractérisée en ce que** chaque paroi (13) du cadre (2) est munie, sur le côté interne, de guidages (28) dirigés transversalement par rapport au fond (1).

9. Construction d'armoire selon l'une quelconque des revendications 7 et 8, **caractérisée en ce qu'**au moins un des éléments de support (5) est monté avec ses deux extrémités par-dessus au moins un guidage (28) de respectivement deux parois (13) du cadre (2) se faisant mutuellement face.

10. Construction d'armoire selon l'une quelconque des revendications précédentes, **caractérisée en ce que** les guidages (28) s'étendent à peu près sur toute la largeur du cadre (2) dirigé transversalement par rapport au fond (1).

11. Construction d'armoire selon l'une quelconque des revendications précédentes, **caractérisée en ce que** les guidages (28) constituent des nervures (28) qui possèdent un élargissement à leur bord libre, tandis que les éléments de support (4 et 5) possèdent, à au moins une extrémité, une partie qui vient s'accrocher derrière cet élargissement.

12. Construction d'armoire selon la revendication précédente, **caractérisée en ce que** les nervures (28) sont de section transversale en T.

13. Construction d'armoire selon les revendications 6 et 12, **caractérisée en ce que** les éléments de support (4 et 5) possèdent au moins, à une extrémité, deux évidements 29 en T qui correspondent à deux nervures adjacentes (28) en T.

14. Construction d'armoire selon l'une quelconque des revendications précédentes, **caractérisée en ce que** les moyens (30) destinés à bloquer une extrémité d'un élément de support (4 ou 5) sur au moins un guidage (28) comprennent un organe de serrage élastique 31 qui vient s'ajuster par-dessus une section de guidage (28), ainsi que des moyens de tension (33, 34) destinés à comprimer cet organe élastique (31) de telle sorte qu'il vienne se serrer par-dessus la section susmentionnée du guidage (28).

15. Construction d'armoire selon l'une quelconque des revendications 1 à 13, **caractérisée en ce que** l'élément de support (4 ou 5) est apte à coulisser avec une extrémité par-dessus deux guidages adjacents (28), les éléments (30) destinés à bloquer une extrémité de l'élément de support (4 ou 5) sur ces guidages (28) comprenant un élément muni d'un corps (40) qui est logé en rotation dans l'élément de support (4 ou 5) et d'au moins une tête oblongue (41) sur au moins un côté de l'élément de support, qui est disposée de manière lâche entre les guidages (28) dans une position de l'élément (40, 41), mais qui, après rotation, est pressée dans ou contre au moins un des guidages (28).

16. Construction d'armoire selon l'une quelconque des revendications précédentes, **caractérisée en ce que** les éléments de support (4 et 5) sont des lattes qui possèdent des bords (26) s'étendant longitudinalement de part et d'autre et dans le prolongement de leur côté avant, qui correspondent aux bords d'un rail DIN.

17. Construction d'armoire selon la revendication précédente, caractérisée en ce qu'on fore des ouvertures (27) à travers les éléments de support, qui sont dirigées transversalement par rapport au côté avant de ces derniers et qui sont destinées à des éléments de fixation.

18. Constituants d'armoire (1, 2 et 3) faisant partie de la construction d'armoire selon l'une quelconque des revendications précédentes.

19. Eléments de support (4 et 5) faisant partie de la construction d'armoire selon l'une quelconque des revendications 1 à 18.

*Fig.1*

*Fig. 2*

Fig. 3

Fig. 4

10

Fig. 5

Fig. 6

Fig. 7

Fig. 9

Fig. 8

Fig.10

*Fig.11*

# Fig.12

# Fig.14

*Fig. 13*

*Fig. 16*

*Fig. 15*

Office européen
des brevets

# RAPPORT DE RECHERCHE EUROPEENNE

Numero de la demande

EP    92 20 0117

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-U-8 713 155 (LA TELEMECANIQUE)<br>* revendications 6,7 *<br>--- | 1 | H02B1/40 |
| A | FR-A-2 117 905 (BASSANI S.P.A.)<br>* revendications 3,4 *<br>--- | 1 | |
| A | DE-C-3 812 941 (RITTAL-WERK RUDOLF LOH)<br>* abrégé; figures 1,2 *<br><br>----- | 1 | |

| | DOMAINES TECHNIQUES RECHERCHES (Int. Cl.5) |
|---|---|
| | H02B |

Le présent rapport a été établi pour toutes les revendications

| Lieu de la recherche | Date d'achèvement de la recherche | Examinateur |
|---|---|---|
| LA HAYE | 29 AVRIL 1992 | LUND M. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

   & : membre de la même famille, document correspondant

EPO FORM 1503 03.82 (P0402)